# EUROPÄISCHE PATENTSCHRIFT

(11) **EP 3 472 487 B1**
(45) Veröffentlichungstag und Bekanntmachung des Hinweises auf die Patenterteilung: **05.08.2020**
(21) Anmeldenummer: 17728203.5
(22) Anmeldetag: 07.06.2017
(51) Int. Cl.: F16D 65/18, F16J 3/04

(54) **SCHEIBENBREMSE FÜR EIN NUTZFAHRZEUG**
DISC BRAKE FOR A COMMERCIAL VEHICLE
FREIN À DISQUE POUR VÉHICULE UTILITAIRE

(30) Priorität: 16.06.2016 DE 102016111035
(43) Veröffentlichungstag der Anmeldung: 24.04.2019
(73) Patentinhaber: KNORR-BREMSE Systeme für Nutzfahrzeuge GmbH, 80809 München (DE)
(72) Erfinder: FISCHER, Rudolf, 85435 Erding (DE); BALINT, Peter, 71134 Aidlingen (DE)
(86) Internationale Anmeldenummer: PCT/EP2017/063768
(87) Internationale Veröffentlichungsnummer: WO 2017/215990

(56) Entgegenhaltungen:
- EP-A1- 0 648 952
- EP-A1- 2 489 897
- WO-A1-2014/170397
- DE-U1- 9 312 128

## Beschreibung

Die Erfindung betrifft eine Scheibenbremse für ein Nutzfahrzeug nach dem Oberbegriff des Anspruchs 1.

Zum Schutz vor Witterungseinflüssen und damit vor Korrosion funktionsrelevanter Bauteile, die im Aufnahmeraum eines Bremssattels einer Scheibenbremse angeordnet sind und zu denen insbesondere eine Zuspanneinrichtung zählt, ist der Aufnahmeraum auf der Seite, die bei einer Schiebesattelbremse dem zuspannseitigen Bremsbelag zugeordnet ist, durch einen Verschlussdeckel weitgehend verschlossen.

Zur Betätigung der Bremse sind Stellspindeln vorgesehen, die verdrehbar in einer Brücke der Zuspanneinrichtung gelagert sind, an der ein pneumatisch oder elektromechanisch betätigbarer Bremshebel derart angreift, dass an den Stellspindeln angeordnete Druckstücke gegen den zugeordneten Bremsbelag gedrückt werden. Dabei sind die die Druckstücke tragenden Stellspindeln durch Öffnungen des Verschlussdeckels geführt.

Der Durchtrittsbereich der jeweiligen Stellspindel ist durch eine Dichtungsanordnung mit einem Faltenbalg abgedichtet, der einerseits an der Stellspindel oder dem Druckstück anliegt und andererseits im Bereich der Öffnung gehalten ist.

Eine Sekundärdichtung, die in Richtung des Aufnahmeraumes dem Faltenbalg nachgeordnet ist, bildet ein redundantes Dichtungselement, durch das bei einem möglichen Versagen des Faltenbalgs der Aufnahmeraum vor grobem Schmutz geschützt ist.

Diese konzentrisch zum Faltenbalg angeordnete Sekundärdichtung liegt dicht einerseits an der Brücke und andererseits im Bereich der Öffnung am Verschlussdeckel an.

Hierzu ebenso wie zur Halterung des Faltenbalges weist der Verschlussdeckel einen die Öffnung begrenzenden Kragen auf, mit einer zum Aufnahmeraum hin axial ausgerichteten Anlagefläche und einer dazu abgewinkelten, radial nach innen gerichteten Auflagefläche, wobei der Faltenbalg reibschlüssig an der Anlagefläche des Kragens anliegt.

Die Sekundärdichtung weist einen umlaufenden Dichtwulst auf, der in einer ringförmigen Vertiefung der Anlagefläche einliegt.

Um die Vertiefung einbringen zu können, ist eine entsprechende Blechdicke des Verschlussdeckels erforderlich, üblicherweise 1,75 mm. Dabei ist die Ausprägung der Vertiefung hinsichtlich ihres Tiefenabmaßes abhängig von der materialspezifischen Verdichtungsmöglichkeit in diesem Bereich.

Unabhängig davon ist auch die Fertigung des solcherart ausgeprägten Kragens aufwendig und teuer und steht einer stets angestrebten Kostenoptimierung entgegen.

Auch die durch die Vertiefung vorgegebene kleinstmögliche Dicke des Einsatzbleches wirkt sich hinsichtlich der Materialkosten nachteilig aus, wobei die Dicke auch einer gewünschten Gewichtsoptimierung entgegensteht.

Eine solche, gattungsgemäße Scheibenbremse ist in der DE 93 12 128 U1 offenbart.

Der Erfindung liegt die Aufgabe zugrunde, eine Scheibenbremse der gattungsgemäßen Art so weiterzuentwickeln, dass sie einfacher und kostengünstiger herstellbar ist und ihr Gewicht reduziert wird.

Diese Aufgabe wird durch eine Scheibenbremse mit den Merkmalen des Anspruchs 1 gelöst.

Durch die erfindungsgemäße Ausgestaltung wird die Sekundärdichtung mittels des Faltenbalges, d.h. eines formstabilen Verstärkungsrings, der in ein umlaufendes, aus einem elastischen Kunststoff bestehendes Bündchen des Faltenbalges eingebettet ist, radial und axial sicher gehalten. Dieses Bündchen liegt reibschlüssig an der Anlagefläche des Kragens an, während der Verstärkungsring in Richtung der Sekundärdichtung aus dem Bündchen ragt und mit seinem freien Ende an der Sekundärdichtung anliegt und diese gegen die Auflagefläche drückt.

Dabei ist die Sekundärdichtung im Auflagebereich des Verstärkungsringes mit mindestens einer Dichtlippe versehen, an der sich der Verstärkungsring mit seiner Stirnseite abstützt.

Der Dichtwulst der Sekundärdichtung weist auf seiner dem Verstärkungsring abgewandten Seite mindestens eine weitere Dichtlippe auf, die an der Auflagefläche des Kragens anliegt, so dass eine hermetische Abdichtung des Aufnahmeraumes durch die Sekundärdichtung gewährleistet ist.

Zur bevorzugten Realisierung der Erfindung ist zumindest der aus dem Bündchen des Faltenbalges austretende Bereich des Verstärkungsringes gegenüber dem, der der Anlagefläche zugeordnet ist, eingeschnürt, also durchmesserkleiner, so dass der Verstärkungsring zum einen die Verstärkungsfunktion gegenüber dem Faltenbalg, d.h. die den Reibschluss mit der Anlagefläche des Kragens gewährleistende Versteifung des Bündchens übernimmt und zum anderen eine radiale Abstützung für den Dichtwulst der Sekundärdichtung bildet. Da der Verstärkungsring in axialer Richtung an der Dichtlippe anliegt, ist, wie erwähnt, durch den Faltenbalg sowohl eine axiale wie auch radiale Sicherung gegeben.

Damit kann auf die Einbringung einer ringförmigen Vertiefung zur Aufnahme des Dichtwulstes der Sekundärdichtung, wie zum Stand der Technik beschrieben, verzichtet werden, d.h., die Auflagefläche für den Dichtwulst kann planeben ausgebildet sein mit der Folge, dass die Blechdicke des Einsatzmaterials des Verschlussdeckels geringer sein kann. Statt wie bisher eine Blechdicke von 1,75 mm als Mindestblechdicke zu wählen, kann die Blechdicke beispielhaft nun lediglich 1,5 mm betragen, wodurch sich sowohl eine Kostenreduzierung hinsichtlich einer Materialbeschaffung wie auch eine Gewichtsreduzierung ergibt, was zu einer Betriebsoptimierung der Scheibenbremse insgesamt beiträgt.

Darüber hinaus ist die Herstellung des Verschlussdeckels durch die Erfindung gleichfalls deutlich einfacher, da ein Einprägen der ringförmigen Vertiefung nicht mehr erforderlich ist, d.h., die Auflagefläche des Kragens ist planeben, so dass der als Stanz-/Umformteil ausgebildete Verschlussdeckel deutlich kostengünstiger herstellbar ist.

Die Ausbildung der Sekundärdichtung derart, dass an der der Auflagefläche des Kragens zugewandten Seite des Dichtwulstes und an der dem Verstärkungsring zugewandten Seite Dichtlippen vorgesehen sind, kann kostenneutral erfolgen, zumal die Sekundärdichtung üblicherweise aus einem zumindest teilelastischen Material besteht, wobei die Dichtlippen bei der Ausbildung des Dichtwulstes mit angeformt werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Einzelheit der Scheibenbremse nach dem Stand der Technik in einer geschnittenen Seitenansicht
- Figur 2: die Einzelheit einer Scheibenbremse gemäß der Erfindung, gleichfalls in einer geschnittenen Seitenansicht
- Figur 3: einen vergrößerten Teilausschnitt der Einzelheit gemäß der Linie III in Figur 2.

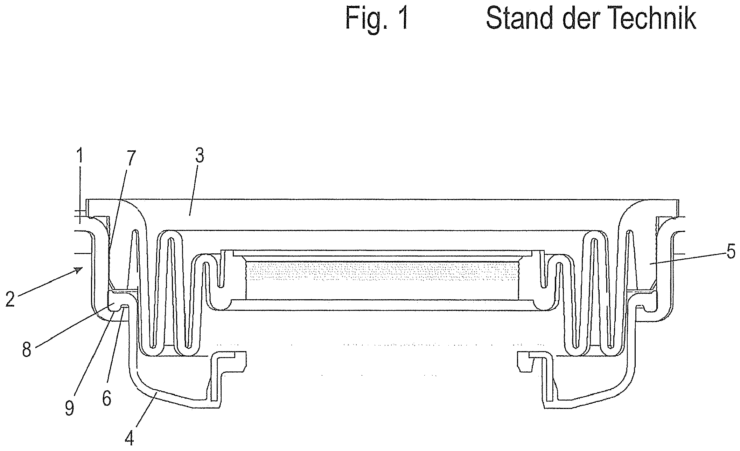

In der **Figur 1** ist der mittels einer Dichtungsanordnung abgedichtete Durchgangsbereich eines einen Aufnahmeraum eines Bremssattels verschließenden Verschlussdeckels 1 für einen Bremsstempel nach dem Stand der Technik abgebildet, mit einem reibschlüssig in einer Öffnung des Verschlussdeckels 1 gehaltenen Faltenbalg 3 sowie einer Sekundärdichtung 4.

Die Öffnung des Verschlussdeckels 1 wird begrenzt durch einen umfänglichen und abgestuften Kragen 2, der eine axial in Richtung des Aufnahmeraumes gerichtete Anlagefläche 7 sowie eine dazu abgewinkelte, radial nach innen gerichtete Auflagefläche 6 aufweist.

Dabei liegt ein Bündchen 5 des Faltenbalgs 3 reibschlüssig an der Anlagefläche 7 an, während ein Dichtwulst 8 der Sekundärdichtung 4 in einer ringförmigen Vertiefung 9 der Auflagefläche 6 einliegt.

Gegenüberliegend stützt sich das Bündchen 5 des Faltenbalges 3 an der zugeordneten Seite der Sekundärdichtung 4 ab.

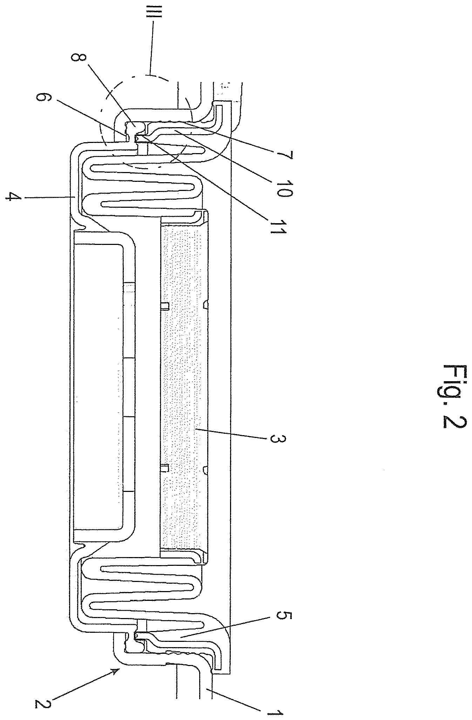

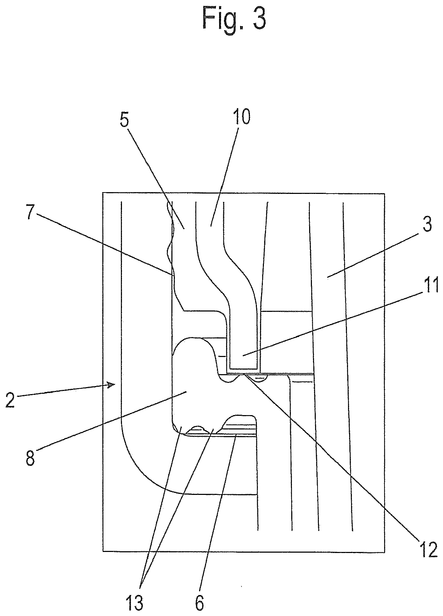

In den **Figuren 2** **und** **3** ist die Dichtungsanordnung gemäß der Figur 1 nach der Erfindung dargestellt, wobei der Dichtwulst 8 der Sekundärdichtung 4 in radialer Richtung zwischen einem formstabilen Verstärkungsring 10 des Faltenbalges 3 und der Anlagefläche 7 des Kragens 2 angeordnet ist.

Der Verstärkungsring 10 ist in das aus einem elastischen Kunststoff bestehende Bündchen 5 des Faltenbalges 3 eingebettet und ragt in Richtung der Sekundärdichtung 4 über das Bündchen 5 hinaus und ist in diesem Bereich als Einschnürung 11 ausgebildet, die durchmesserkleiner ist als der in dem Bündchen 5 eingebettete Bereich.

In der Figur 3 ist ein vergrößerter Ausschnitt der Dichtungsanordnung nach Figur 2 abgebildet. Darin ist zu erkennen, dass die Sekundärdichtung 4 im Überdeckungsbereich mit dem Verstärkungsring 11 eine Dichtlippe 12 aufweist, wobei nach einem Eindrücken des Faltenbalges 3 in die Öffnung die Dichtlippe 12 durch den Verstärkungsring 11verpresst ist, ebenso wie auf der gegenüberliegenden Seite am Dichtwulst 8 angeordnete weitere, insbesondere konzentrische Dichtlippen 13, wodurch sich der Dichtwulst 8 im Zusammenwirken mit dem Verstärkungsring 11 derart verkeilt, dass eine axiale und radiale Sicherung am Verschlussdeckel 1 gewährleistet ist.

Die Dichtlippe 12 und/oder die Dichtlippen 13 dienen im Übrigen einem Toleranzausgleich durch ihre Verformbarkeit, wobei eine der Anlagefläche 7 zugeordnete äußere Dichtlippe 13 in den zwischen der Anlagefläche 7 und der Auflagefläche 6 gebildeten Eckbereich gedrückt ist.

### Bezugszeichenliste

- 1: Verschlussdeckel
- 2: Kragen
- 3: Faltenbalg
- 4: Sekundärdichtung
- 5: Bündchen
- 6: Auflagefläche
- 7: Anlagefläche
- 8: Dichtwulst
- 9: Vertiefung
- 10: Verstärkungsring
- 11: Einschnürung
- 12: Dichtlippe
- 13: Dichtlippe

## Patentansprüche

1. Scheibenbremse mit einem Bremssattel, in dem zwei in Funktion gegen eine Bremsscheibe pressbare Bremsbeläge angeordnet sind, von denen ein aktionsseitiger über mindestens eine in einer Brücke axial verstellbar gehaltene Stellspindel mittels einer Zuspanneinrichtung betätigbar ist und die Stellspindel durch eine Öffnung eines Verschlussdeckels (1) geführt ist, der einen Aufnahmeraum des Bremssattels verschließt, wobei zur Abdichtung des Aufnahmeraums im Bereich der Öffnung eine Dichtungsanordnung vorgesehen ist, mit einem Faltenbalg (3), der an der Stellspindel oder einem daran angeschlossenen Druckstück anliegt, sowie einer konzentrisch zum Faltenbalg (3) angeordneten Sekundärdichtung (4), die ebenso wie der Faltenbalg (3) an einem die Öffnung des Verschlussdeckels (1) begrenzenden, abgestuften Kragen (2) mit einer umfänglichen, axial ausgerichteten Anlagefläche (7) und einer abgewinkelt dazu radial nach innen gerichteten Auflagefläche (6) gehalten ist, auf der ein umlaufender Dichtwulst (8) der Sekundärdichtung (4) aufliegt,
**dadurch gekennzeichnet, dass**
der Dichtwulst (8) in radialer Richtung zwischen einem formstabilen Verstärkungsring (10) des Faltenbalgs (3) und der Anlagefläche (7) angeordnet ist.

2. Scheibenbremse nach Anspruch 1,
**dadurch gekennzeichnet, dass**
der Verstärkungsring (10) eine durchmesserkleinere Einschnürung (11) aufweist, die aus einem Bündchen (5) des Faltenbalges (3) vorsteht und an der der Dichtwulst (8) anliegt.

3. Scheibenbremse nach Anspruch 1 oder 2,
**dadurch gekennzeichnet, dass**
der Verstärkungsring (10) in das aus einem elastischen Kunststoff bestehende Bündchen (5) des Faltenbalgs (3) eingebettet ist.

4. Scheibenbremse nach einem der vorhergehenden Ansprüche,
**dadurch gekennzeichnet, dass**
die Sekundärdichtung (4) in dem der zugeordneten Stirnseite des Verstärkungsringes (10) zugewandten Bereich mindestens eine Dichtlippe (12) aufweist, an der der Verstärkungsring (10) anliegt.

5. Scheibenbremse nach Anspruch 4,
**dadurch gekennzeichnet, dass**
die Sekundärdichtung (4) auf ihrer der Dichtlippe (12) abgewandten Seite mindestens eine Dichtlippe (13) aufweist, die an der Auflagefläche (6) anliegt.

6. Scheibenbremse nach Anspruch 5,
**dadurch gekennzeichnet, dass**
die Dichtlippe (12, 13) an den Dichtwulst (8) angeformt ist.

7. Scheibenbremse nach einem der vorhergehenden Ansprüche,
**dadurch gekennzeichnet, dass**
die Auflagefläche (6) planeben ausgebildet ist.

8. Scheibenbremse nach einem der vorhergehenden Ansprüche,
**dadurch gekennzeichnet, dass**
die Dicke des aus Blech bestehenden Verschlussdeckels (1) 1,5 mm ist.

9. Scheibenbremse nach einem der vorhergehenden Ansprüche,
**dadurch gekennzeichnet, dass**
der Dichtwulst (8) an der Anlagefläche (7) dichtend anliegt.

## Claims

1. Disc brake with a brake caliper in which two brake pads are arranged, which for functional purposes can be pressed against a brake disc, one of which on the action side can be actuated by a brake application device by way of at least one axially displaceable actuating spindle held in a bridge, the said actuating spindle being guided through an opening in a closing cover (1) which closes a brake caliper accommodation space, wherein to seal the said accommodation space a seal arrangement is provided in the area of the said opening, comprising a bellows (3) which bears against the actuating spindle or a pressure piece connected thereto, and a secondary seal (4) arranged concentrically with the bellows (3), which, like the bellows (3), is held against a stepped collar (2) that delimits the opening in the closing cover (1) with a circumferential, axially orientated contact surface (7) and, at an angle thereto, a contact surface (6) orientated radially inwards, against which a circumferential sealing bead (8) of the secondary seal (4) rests,
**characterised in that**
the sealing bead (8) is arranged in the radial direction between a dimensionally stable reinforcing ring (10) of the bellows (3) and the contact surface (7).

2. Disc brake according to Claim 1,
**characterised in that**
the reinforcing ring (10) comprises a constriction (11) of smaller diameter which stands out from a cuff (5) of the bellows (3) and against which the sealing bead (8) rests.

3. Disc brake according to Claims 1 or 2,
**characterised in that**
the reinforcing ring (10) is embedded in a cuff (5) of the bellows (3), which cuff consists of an elastic plastic material.

4. Disc brake according to any of the preceding claims,
**characterised in that**
the secondary seal (4) has at least one sealing lip (12) in the area facing towards the associated end face of the reinforcing ring (10), against which lip the reinforcing ring (10) rests.

5. Disc brake according to Claim 4,
**characterised in that**
on its side facing away from the sealing lip (12), the secondary seal (4) has a sealing lip (13) which rests against the contact surface (6).

6. Disc brake according to Claim 5,
**characterised in that**
the sealing lip (12, 13) is moulded onto the sealing bead (8).

7. Disc brake according to any of the preceding claims,
**characterised in that**
the contact surface (6) is flat.

8. Disc brake according to any of the preceding claims,
**characterised in that**
the thickness of the closing cover (1) made of sheet metal is 1.5 mm.

9. Disc brake according to any of the preceding claims,
**characterised in that**
the sealing bead (8) rests against the contact surface (7), forming a seal.

## Revendications

1. Frein à disque comprenant un étrier de frein, dans lequel sont montées deux garnitures de frein qui, en fonctionnement, peuvent être pressées sur un disque de frein et dont l'une du côté de l'action peut, au moyen d'un dispositif de serrage, être actionnée par au moins une broche de réglage maintenue radiale axialement dans un pontet et la broche de réglage est guidée dans une ouverture d'un couvercle (1) de fermeture qui ferme un espace de logement de l'étrier de frein, dans lequel, pour rendre étanche l'espace de logement dans la région de l'ouverture, il est prévu un système d'étanchéité ayant un soufflet (3) à plis qui s'applique à la broche de réglage ou à une pièce d'application d'une pression qui y est raccordée, ainsi qu'une étanchéité (4) secondaire qui est disposée concentriquement au soufflet (3) à plis et qui tout comme le soufflet (3) à plis est maintenu sur un collet (2) étagé délimitant l'ouverture du couvercle (1) de fermeture et ayant une surface (7) de contact de pourtour dirigée axialement et, coudée par rapport à celle-ci, une surface (6) de portée dirigée vers l'intérieur radialement, sur laquelle porte un bourrelet (8) d'étanchéité faisant le tour de l'étanchéité (4) secondaire,
**caractérisé en ce que**
le bourrelet (8) d'étanchéité est disposé dans la direction radiale entre un anneau (10) de renfort de forme stable du soufflet (3) à plis et la surface (7) de contact.

2. Frein à disque suivant la revendication 1,
**caractérisé en ce que**
l'anneau (10) de renfort a un resserrement (11) de diamètre plus petit qui est en saillie d'une collerette (5) du soufflet (3) à plis et est en contact avec le bourrelet (8) d'étanchéité.

3. Frein à disque suivant la revendication 1 ou 2,
**caractérisé en ce que**
l'anneau (10) de renfort est incorporé dans la collerette (5) en matière plastique élastique du soufflet (3) d'étanchéité.

4. Frein à disque suivant l'une des revendications précédentes,
**caractérisé en ce que**
l'étanchéité (4) secondaire a, dans la région tournée vers le côté frontal associé de l'anneau (10) de renfort, au moins une lèvre (12) d'étanchéité en contact avec l'anneau (10) de renfort.

5. Frein à disque suivant la revendication 4,
**caractérisé en ce que**
l'étanchéité (4) secondaire a, sur son côté loin de la lèvre (12) d'étanchéité, au moins une lèvre (13) d'étanchéité qui est en contact avec la surface (6) d'application.

6. Frein à disque suivant la revendication 5,
**caractérisé en ce que**
la lèvre (12, 13) d'étanchéité vient de matière avec le bourrelet (8) d'étanchéité.

7. Frein à disque suivant l'une des revendications précédentes,
**caractérisé en ce que**
la surface (6) de portée est plane.

8. Frein à disque suivant l'une des revendications précédentes,
**caractérisé en ce que**
l'épaisseur du couvercle (1) de fermeture en tôle est de 1,5 mm.

9. Frein à disque suivant l'une des revendications précédentes,
**caractérisé en ce que**
le bourrelet (8) d'étanchéité est en contact d'une manière étanche avec la surface (7) d'étanchéité.
